# EUROPEAN PATENT APPLICATION

(11) **EP 4 793 250 A1**
(43) Date of publication of application: **19.08.2026**
(21) Application number: 24876961.4
(22) Date of filing: 29.08.2024
(51) Int. Cl.: C04B 14/28, C04B 28/10, C04B 111/28

(54) **CALCIUM CARBONATE COMPOUND AND WATER-CONTAINING COMPOSITION**

(30) Priority: 11.10.2023 JP 2023175700
(71) Applicant: Konoshima Chemical Co., Ltd., Osaka-shi, Osaka 541-0042 (JP)
(72) Inventor: MATSUI, Seiji, Mitoyo-shi, Kagawa 769-1103 (JP); TAKENAKA, Hiroki, Mitoyo-shi, Kagawa 769-1103 (JP); SATOMURA, Hideaki, Mitoyo-shi, Kagawa 769-1103 (JP)
(74) Representative: Parker, Andrew James
(86) International application number: PCT/JP2024/031051
(87) International publication number: WO 2025/079361

(57) **Abstract**

Provided are a calcium-based carbonate compound and a water-containing composition capable of further reducing shrinkage of a heated surface and an increase in the back surface temperature during heating when used for an inorganic molded body as a building material. A calcium-based carbonate compound, in which the viscosity at 30 rpm of a dispersion in a state of being dispersed in water at a concentration of 33 mass% is 1000 cP or more and 2000 cP or less. The viscosity at 6 rpm of the dispersion in a state of being dispersed in water at a concentration of 33 mass% is preferably 1000 cP or more and 2500 cP or less. The ratio µ₆/µ₃₀ of the viscosity µ₆ at 6 rpm to the viscosity µ₃₀ at 30 rpm of the dispersion in a state of being dispersed in water at a concentration of 33 mass% is preferably 1.0 or more and 2.5 or less.

## Description

### TECHNICAL FIELD

The present invention relates to a calcium-based carbonate compound and a water-containing composition.

### BACKGROUND ART

The inorganic molded body is a molded body mainly constituted by inorganic substances such as a hydraulic material and a siliceous material, having characteristics such as fire resistance, light weight, high strength, and workability, and therefore is widely used for an outer wall material of a house or the like, a roof base material, an eave soffit material, and the like.

On the other hand, due to the recent increase in environmental awareness, attempts have been made to reuse by-product materials and by-product energy such as waste material, exhaust gas, and waste heat secondarily generated in industrial processes.

As a technique for promoting the reuse of waste material while enhancing fire resistance, which is one of the important safety performances required for an inorganic molded body, a technique has been proposed in which a seawater residue mainly including calcium carbonate and magnesium hydroxide that are by-products in a process of removing carbonate in seawater in a process of producing magnesium hydroxide from seawater is applied as a calcareous material (JP-A-2012-116685).

### PRIOR ART DOCUMENT

### PATENT DOCUMENT

Patent Document 1: JP-A-2012-116685

### SUMMARY OF THE INVENTION

### PROBLEMS TO BE SOLVED BY THE INVENTION

However, even with the above technique, shrinkage of the heated surface and an increase in the back surface temperature may occur during heating, so that it is required to further improve the fire resistance of an inorganic molded body as a building material.

Furthermore, carbon dioxide is being widely recognized as a warming gas, and reuse and emission reduction of carbon dioxide as a secondary product from industrial processes are urgent issues.

An object of the present invention is to provide a calcium-based carbonate compound and a water-containing composition capable of exhibiting fire resistance at a higher level when used for an inorganic molded body as a building material.

### MEANS FOR SOLVING THE PROBLEMS

As a result of intensive studies, the present inventors have found that the above problem can be solved by the following configuration, and has completed the present invention.

The present invention relates to, in one embodiment, a calcium-based carbonate compound in which the viscosity at 30 rpm of the dispersion in a state of being dispersed in water at a concentration of 33 mass% is 1000 cP or more and 2000 cP or less.

According to the calcium-based carbonate compound, the viscosity at 30 rpm of the dispersion in a state in which the calcium-based carbonate compound is dispersed at a predetermined concentration is within a specific range, and therefore when the calcium-based carbonate compound is used for an inorganic molded body, fire resistance can be exhibited at a higher level. The reason for this is not clear, but is presumed as follows.

The present inventors have studied application of a dispersion of a calcium-based carbonate compound obtained in a step of producing a synthetic calcium-based carbonate compound as it is to a process for producing an inorganic molded body, and as a result, have found that when the dispersion has the specific viscosity, the shrinkage of the heated surface and the increase in the back surface temperature during heating can be each suppressed.

The dispersion in a state in which the calcium-based carbonate compound is dispersed has a relatively high viscosity within a specific range. This is presumed to be because aggregation of the calcium-based carbonate compound is reduced and the degree of dispersion in the state of primary particles is high. By incorporating the dispersion containing the calcium-based carbonate compound in the state of primary particles as it is at the time of producing an inorganic molded body, the calcium-based carbonate compound is uniformly dispersed in the state of primary particles also in the inorganic molded body. As a result, the calcium-based carbonate compound serves as a so-called reinforcing material, so that the shrinkage of the heated surface can be suppressed. In addition, since the calcium-based carbonate compound having low thermal conductivity is uniformly dispersed, the heat insulating property in the thickness direction of the inorganic molded body is enhanced, and the increase in the back surface temperature can be suppressed.

It is presumed that, due to these combined actions, the shrinkage of the heated surface and the increase in the back surface temperature during heating can be each suppressed at higher levels, and the entire inorganic molded body can exhibit fire resistance at a high level.

In the present specification, the "calcium-based carbonate compound" is a compound containing calcium carbonate as a main component, and is a concept that allows the inclusion or coexistence of other subcomponents that can be incorporated in the production process and the like. The content of calcium carbonate in the calcium-based carbonate compound is preferably 90 mass% or more. As the method for measuring the content percentage of calcium carbonate in the calcium-based carbonate compound, XRF (fluorescent X-ray analysis) can be suitably employed.

In one embodiment, the viscosity at 6 rpm of the dispersion in a state in which the calcium-based carbonate compound is dispersed in water at a concentration of 33 mass% is preferably 1000 cP or more and 2500 cP or less. Thereby, the homogeneity of the degree of dispersion of the calcium-based carbonate compound is improved, and the shrinkage of the heated surface and the increase in the back surface temperature during heating can be each suppressed at higher levels.

In one embodiment, the ratio µ₆/µ₃₀ of the viscosity µ₆ at 6 rpm to the viscosity µ₃₀ at 30 rpm of the dispersion in a state in which the calcium-based carbonate compound is dispersed in water at a concentration of 33 mass% is preferably 1.0 or more and 2.5 or less. Thereby, the thixotropy in the dispersion can be reduced, and even in a state where the stirring speed or the shear force is high or low, the viscosities in any of the states are not greatly separated, and a certain degree of high viscosity will be maintained.

As a result, deformation and deterioration of the molded body at the time of load and release of force such as at the time of molding or pressing in the step of producing an inorganic molded body can be suppressed, and an inorganic molded body having excellent fire resistance can be produced.

In one embodiment, the aspect ratio of the average major diameter to the average minor diameter of the calcium-based carbonate compound is preferably 2 or more and 19 or less. In an embodiment, the calcium-based carbonate compound preferably has an average particle diameter measured by a laser diffraction method of 1.1 µm or more and 12.5 µm or less. In an embodiment, the calcium-based carbonate compound preferably has an average major diameter in scanning electron microscope observation of 0.5 µm or more and 25 µm or less. By combining and satisfying one or more of these configurations, a viscosity within a specific range can be suitably imparted to the dispersion of the calcium-based carbonate compound.

The present invention relates to, in another embodiment, a water-containing composition containing water and the calcium-based carbonate compound.

Since the water-containing composition may have a viscosity in the specific range, the degree of the state of primary particles of the calcium-based carbonate compound can be maintained high. Therefore, when the water-containing composition is applied to production of an inorganic molded body, the obtained inorganic molded body can highly suppress the shrinkage of the heated surface and the increase in the back surface temperature during heating.

In one embodiment, the water content of the water-containing composition may be 40 mass% or more and 99 mass% or less. Thereby, the water-containing composition can take a so-called slurry form.

In one embodiment, the water content of the water-containing composition may be 5 mass% or more and 60 mass% or less. Thereby, the water-containing composition can take a so-called cake form.

In one embodiment, the water-containing composition is preferably obtained without being dried in the step of producing a synthetic calcium-based carbonate compound. When a synthetic calcium-based carbonate compound that is a reaction product of calcium hydroxide and carbon dioxide gas (carbon dioxide) is used as the calcium-based carbonate compound, carbon dioxide secondarily generated in industrial processes can be reused to contribute to reduction of the emission of carbon dioxide in the entire industrial process. Furthermore, since the water-containing composition can be obtained without being dried, the emission of carbon dioxide can be further reduced.

The present invention relates to, in still another embodiment, an inorganic molded body containing the calcium-based carbonate compound.

Since the inorganic molded body contains the calcium-based carbonate compound, the inorganic molded body can exhibit fire resistance at a higher level.

The present invention relates to, in yet still another embodiment, a method for producing an inorganic molded body, including a step of molding an inorganic composition containing the water-containing composition.

In the producing method, since the water-containing composition is directly subjected to the molding step, an inorganic molded body having excellent fire resistance can be efficiently produced.

### BRIEF DESCRIPTION OF THE DRAWINGS

FIG. 1 is an SEM photograph of a calcium-based carbonate compound obtained from a water-containing composition of Example 1-1 of the present invention.
FIG. 2 is an SEM photograph of a calcium-based carbonate compound obtained from a water-containing composition of Example 1-2 of the present invention.

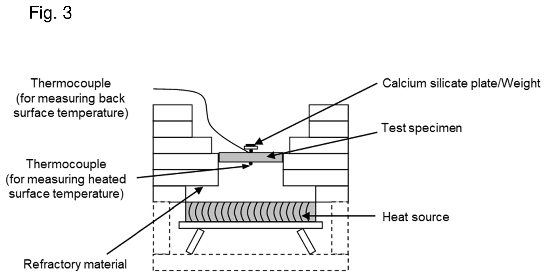

FIG. 3 is a partial perspective view schematically showing a heating tester.

### MODE FOR CARRYING OUT THE INVENTION

The calcium-based carbonate compound and the water-containing composition according to an embodiment of the present invention will be described below. The present invention is not limited to these embodiments.

### <Calcium-based carbonate compound>

The calcium-based carbonate compound according to the present embodiment is a calcium-based carbonate compound in which the viscosity at 30 rpm of the dispersion in a state of being dispersed in water at a concentration of 33 mass% is 1000 cP or more and 2000 cP or less. The viscosity at 30 rpm is preferably 1100 cP or more and 1900 cP or less, more preferably 1200 cP or more and 1800 cP or less. Thereby, workability is good, and the degree of the state of primary particles of the calcium-based carbonate compound can be maintained high. When the dispersion is used for producing an inorganic molded body, the shrinkage of the heated surface and the increase of the back surface temperature during heating can be reduced.

The viscosity at 6 rpm of the dispersion in a state in which the calcium-based carbonate compound is dispersed in water at a concentration of 33 mass% is 1000 cP or more and 2500 cP or less. The viscosity at 6 rpm is preferably 1100 cP or more and 2400 cP or less, more preferably 1200 cP or more and 2300 cP or less.

Thereby, the homogeneity of the degree of dispersion of the calcium-based carbonate compound can be improved. When the dispersion is used for producing an inorganic molded body, the shrinkage of the heated surface and the increase in the back surface temperature during heating can be each suppressed at higher levels.

The ratio µ₆/µ₃₀ of the viscosity µ₆ at 6 rpm to the viscosity µ₃₀ at 30 rpm of the dispersion in a state in which the calcium-based carbonate compound is dispersed in water at a concentration of 33 mass% is 1.0 or more and 2.5 or less. The ratio µ₆/µ₃₀ is preferably 1.0 or more and 2.2 or less, more preferably 1.0 or more and 1.8 or less. Thereby, it is possible to suppress the occurrence of thixotropy in the state of a dispersion, and it is possible to prevent deformation and deterioration of the molded body at the time of load and release of force in the step of producing an inorganic molded body.

As the crystal structure of the calcium-based carbonate compound, a calcite type, an aragonite type, or a combination thereof can be suitably employed. Given that the calcium-based carbonate compound exhibits an aspect ratio described below, it is preferable to include at least an aragonite type crystal structure.

The aspect ratio of the average major diameter to the average minor diameter of the calcium-based carbonate compound is preferably 2 or more and 19 or less, more preferably 2.5 or more and 17 or less, and further preferably 3 or more and 15 or less. By adjusting the aspect ratio of the calcium-based carbonate compound within the above range, the dispersion of the calcium-based carbonate compound can suitably have a viscosity in the above range. In addition, since the calcium-based carbonate compound having a high aspect ratio effectively serves as a reinforcing material, and the shrinkage of the heated surface and the increase in the back surface temperature are suppressed, so that excellent fire resistance can be exhibited in the entire inorganic molded body.

When the inorganic molded body is prepared by a papermaking method, the aspect ratio of the calcium-based carbonate compound is preferably 4 or more and 19, more preferably 6 or more and 18 or less, and still more preferably 8 or more and 17 or less. When the inorganic molded body is prepared by an extrusion molding method, the aspect ratio of the calcium-based carbonate compound is preferably 2 or more and 12 or less, more preferably 2.5 or more and 10 or less, and still more preferably 3 or more and 8 or less.

The average particle diameter of the calcium-based carbonate compound measured by a laser diffraction method is preferably 1.1 µm or more and 12.5 µm or less, more preferably 1.5 µm or more and 12 µm or less, and still more preferably 2 µm or more and 10 µm or less. Thereby, the dispersion of calcium-based carbonate compound can preferably have a viscosity within the aforementioned range. The dispersibility of the calcium-based carbonate compound can be improved, and the shrinkage of the heated surface can be efficiently suppressed.

The average major diameter in scanning electron microscope observation of the calcium-based carbonate compound is preferably 0.5 µm or more and 25 µm or less, more preferably 1 µm or more and 22 µm or less, and still more preferably 2 µm or more and 18 µm or less. Thereby, the dispersion of calcium-based carbonate compound can preferably have a viscosity within the aforementioned range. It is possible to suppress aggregation within the calcium-based carbonate compound or between the calcium-based carbonate compound and other components, and as a result, it is possible to suppress the shrinkage of the heated surface and the temperature increase at the back surface during heating, respectively, at a higher level.

The BET specific surface area of the calcium-based carbonate compound is preferably 1 m²/g or more and 10 m²/g or less, more preferably 2 m²/g or more and 9 m²/g or less, and still more preferably 3 m²/g or more and 8 m²/g or less. Thereby, the dispersibility of the calcium-based carbonate compound can be improved, and as a result, it is possible to suppress the shrinkage of the heated surface and the temperature increase at the back surface during heating, respectively, at a higher level.

In an X-ray diffraction measurement of the calcium-based carbonate compound, the ratio Iₐ/I_{c} of the peak intensity Iₐ of aragonite to the peak intensity I_{c} of calcite is preferably 0.02 or more, more preferably 0.20 or more, and still more preferably 1.00 or more. Thereby, a high aspect ratio can be efficiently imparted to the calcium-based carbonate compound, and the viscosity of the dispersion can be appropriately controlled. In addition, the fire resistance of the inorganic molded body can be improved to a higher level.

The calcium-based carbonate compound is preferably a synthetic calcium-based carbonate compound. When a synthetic calcium-based carbonate compound that is a reaction product of calcium hydroxide and carbon dioxide gas (carbon dioxide) is used as the calcium-based carbonate compound, carbon dioxide secondarily generated in industrial processes can be reused to contribute to reduction of the emission of carbon dioxide in the entire industrial process. In addition, the source of the calcium-based carbonate compound may be a seawater residue mainly including the calcium-based carbonate compound and magnesium hydroxide that are by-products in a process of removing carbonate in seawater in a process of producing magnesium hydroxide from seawater.

### <Water-containing composition>

The water-containing composition according to the present embodiment contains water and the calcium-based carbonate compound. Since the water-containing composition contains the calcium-based carbonate compound having the above-described configuration, the water-containing composition can have a viscosity in the specific range.

The water content of the water-containing composition may be 40 mass% or more and 99 mass% or less, 50 mass% or more and 99 mass% or less, or 60 mass% or more and 99 mass% or less. Thereby, the water-containing composition can take a so-called slurry form.

The water content of the water-containing composition may be 5 mass% or more and 60 mass% or less, 10 mass% or more and 60 mass% or less, or 15 mass% or more and 60 mass% or less. Thereby, the water-containing composition can take a so-called cake form.

The method for measuring the water content of the water-containing composition is as described in Examples.

The water-containing composition is preferably obtained without being dried in the step of producing a synthetic calcium-based carbonate compound (described later). When a synthetic calcium-based carbonate compound that is a reaction product of calcium hydroxide and carbon dioxide gas (carbon dioxide) is used as the calcium-based carbonate compound, carbon dioxide secondarily generated in industrial processes can be reused to contribute to reduction of the emission of carbon dioxide in the entire industrial process. Furthermore, since the water-containing composition can be obtained without being dried, the emission of carbon dioxide can be further reduced.

In addition to the calcium-based carbonate compound, the water-containing composition may contain a known optional component such as a surfactant, a viscosity modifier, another metal or metal salt, an acid, or an alkali.

### <Method for producing calcium-based carbonate compound and Method for producing water-containing composition>

The method for synthesizing the calcium-based carbonate compound is not particularly limited, and a known production method can be employed. Typically, preferable is the carbon dioxide gas method, in which carbon dioxide gas is blown into milk of lime (a slurry in which slaked lime is further excessively added to a saturated aqueous solution of slaked lime) for carbonization. As the carbon dioxide gas used in the carbon dioxide gas method, flue exhaust gas from a lime firing furnace installed in the vicinity of the production plant of the calcium-based carbonate compound, and exhaust gas from a boiler, a refuse incinerator, and the like can be used.

As a method for imparting a predetermined aspect ratio to the calcium-based carbonate compound based on the carbon dioxide gas method, a known method can also be employed. Specific examples of the method include: a method for producing a calcium-based carbonate compound in which the amount of carbon dioxide gas is adjusted in each stage in the carbonation step; a method for producing a calcium-based carbonate compound in which heating is performed in the carbonation stage; a method for producing a calcium-based carbonate compound in which an acicular light calcium-based carbonate compound is used as a seed crystal in a slaked lime slurry, and carbon dioxide gas is introduced into the slurry to grow the seed crystal to a desired particle size through a carbonation reaction; a method for producing a calcium-based carbonate compound in which an aragonite-based acicular calcium-based carbonate compound is added to a slaked lime slurry, and the slurry is stirred with high stirring power to perform a carbonation reaction; a method for producing an aragonite crystal-type calcium-based carbonate compound in which a phosphate compound is added; a method for producing a calcium-based carbonate compound in which a sulfate compound is added to obtain a spindle calcium-based carbonate compound; a method for producing an aragonite crystal-type calcium-based carbonate compound in which a slaked lime slurry prepared with an alkaline aqueous solution is used; and a method for producing an aragonite-type calcium-based carbonate compound in which a slaked lime slurry prepared with water containing magnesium ions is used. By using these methods alone or in combination of two or more, a calcium-based carbonate compound including an aragonite-type crystal structure can be efficiently produced.

Among them, the method for producing the calcium-based carbonate compound having a high aspect ratio and oil absorption is preferably a method for producing a calcium-based carbonate compound in which an acicular synthetic calcium-based carbonate compound having an aragonite-type crystal structure is used as a seed crystal in a slaked lime slurry, and carbon dioxide gas is introduced into the slurry to grow the seed crystal to a desired particle size through a carbonation reaction (hereinafter, also referred to as "seed crystal method").

In the seed crystal method, the blending amount of the seed crystal is preferably 1 part by mass or more and 30 parts by mass or less, more preferably 5 parts by mass or more and 20 parts by mass or less, and still more preferably 8 parts by mass or more and 15 parts by mass or less, based on 100 parts by mass of the slaked lime (in terms of CaO).

In the seed crystal method, the concentration of the carbon dioxide gas varies depending on the type of exhaust gas generated from each combustion engine, and is preferably 1 vol% or more, more preferably 5 vol% or more, and still more preferably 10 vol% or more in consideration of carbonation efficiency. In consideration of carbonation efficiency and production capacity, the flow rate of the carbon dioxide gas is preferably 10 L/min or more and 200 L/min, more preferably 30 L/min or more and 150 L/min, and still more preferably 60 L/min or more and 120 L/min, per 10 kg of the charged raw material CaO content.

In the seed crystal method, the carbonation temperature (the temperature of the slaked lime slurry) is preferably 40 °C or higher and 100 °C or lower, more preferably 50 °C or higher and 90 °C or lower, and still more preferably 60 °C or higher and 80 °C or lower.

In the seed crystal method, it is preferable to proceed with carbonation in the presence of a phosphate. The phosphate is not particularly limited, and examples thereof include phosphoric acid, sodium dihydrogen phosphate anhydride, sodium dihydrogen phosphate monohydrate, sodium dihydrogen phosphate dihydrate, disodium hydrogen phosphate 12-hydrate, potassium dihydrogen phosphate anhydride, and ammonium dihydrogen phosphate anhydride.

In the seed crystal method, the blending amount of the phosphate is preferably 1 part by mass or more and 25 parts by mass or less, more preferably 4 parts by mass or more and 18 parts by mass or less, and still more preferably 6 parts by mass or more and 12 parts by mass or less, based on 100 parts by mass of the slaked lime (in terms of CaO).

When a high aspect ratio is not required, the calcium-based carbonate compound can be produced without blending a seed crystal or a phosphate.

According to the above procedure, a calcium-based carbonate compound in the state of a dispersion can be produced. In addition, a water-containing composition can be obtained by using the dispersion as it is in the form of slurry or cake without being dried in which the calcium-based carbonate compound is dispersed.

The water content of the water-containing composition may be adjusted by adding water to the obtained water-containing composition, removing water through filtration or pressing of the water-containing composition, or combining them.

In addition to the carbon dioxide gas method, a waste seawater utilization method in which an alkali agent such as magnesium hydroxide is added to waste seawater (residue from which magnesium is removed) generated when slaked lime or the like is added to seawater to produce magnesium hydroxide, and carbon dioxide gas is blown into the waste seawater is also preferable from the viewpoint of waste utilization and reduction of carbon dioxide. Further, as described above, the source of the calcium-based carbonate compound may be a seawater residue mainly including the calcium-based carbonate compound and magnesium hydroxide that are by-products in a process of removing carbonate in seawater in a process of producing magnesium hydroxide from seawater. The water-containing composition obtained by these methods may be subjected to washing with water or adjustment of the water content.

### <Applications of calcium-based carbonate compound and water-containing composition>

The applications of the calcium-based carbonate compound and the water-containing composition are not particularly limited. As applications, for example, they are suitable as a functional agent for an inorganic molded body typified by a building material, a filler for a resin, and the like. Hereinafter, a description is made of an aspect in which the calcium-based carbonate compound and the water-containing composition are used for an inorganic molded body.

The inorganic molded body is preferably manufactured by an inorganic composition containing a hydraulic material, a siliceous material, a reinforcing fiber material, and a calcium-based carbonate compound.

### (Hydraulic material)

Examples of the hydraulic material include cementitious materials, gypsum, lime, slag, and the like. The cementitious materials include commonly used cements such as ordinary Portland cement, early-strength cement, medium heat cement, fly ash cement, blast furnace slag cement, and alumina cement. Examples of the gypsum include anhydrous gypsum, hemihydrate gypsum, and dihydrate gypsum. Examples of the slag include blast furnace slag and converter slag. These hydraulic materials can be used alone or in combination of two or more thereof.

The content of the hydraulic material is preferably 5 mass% or more and 45 mass% or less, more preferably 8 mass% or more and 42 mass% or less, still more preferably 10 mass% or more and 40 mass% or less, based on the total amount of the materials constituting the inorganic molded body. Adjusting the content of the hydraulic material within the above range can improve physical properties such as bending strength and peeling strength of the inorganic molded body, and can suppress an increase in bulk specific gravity of the inorganic molded body and enhance workability at the time of construction, and the like.

### (Siliceous material)

Examples of the siliceous material include materials containing a large amount of SiO₂, such as quartz sand, quartz powder, silica fume, fly ash, diatomaceous earth, layered silicate (e.g. mica, talc, kaolin, bentonite), pearlite, wollastonite, and lightweight aggregate (for example, fly ash balloon, pearlite, shirasu balloon, glass foam, and the like). These siliceous materials can be used alone or in combination of two or more thereof. Talc, mica, and wollastonite can also be used as a reinforcing fiber material described later.

The content of the siliceous material is preferably 10 mass% or more and 55 mass% or less, more preferably 12 mass% or more and 50 mass% or less, still more preferably 15 mass% or more and 45 mass% or less, based on the total amount of the materials constituting the inorganic molded body. When the content of the siliceous material is within the above range, the bending strength, bulk specific gravity, water absorption rate, dimensional stability, and the like of the inorganic molded body can be adjusted within a desired range. Note that when a lightweight aggregate having a unit volume mass of 0.5 g/cm³ or less such as pearlite, fly ash balloon, or shirasu balloon is blended as the siliceous material, in order to prevent the bulk specific gravity from becoming too light and the strength such as bending strength and peeling strength from becoming weak, it is preferable to use another siliceous material in combination such that the content of the lightweight aggregate is 20 mass% or less based on the total amount of the materials constituting the inorganic molded body.

### (Reinforcing fiber material)

As the reinforcing fiber material, for example, pulps such as softwood pulp, hardwood pulp, pulp obtained by fibrillating these pulps, and pulp obtained by defibrating waste paper, organic reinforcing fiber materials such as vinylon fiber, acrylonitrile fiber, and polypropylene fiber, and inorganic reinforcing fiber materials such as rock wool and glass fiber can be used. These reinforcing fiber materials can be used alone or in combination of two or more thereof.

In order to improve the strength of and impart toughness to the inorganic molded body, the content of the reinforcing fiber material is preferably 2 mass% or more and 30 mass% or less, more preferably 3 mass% or more and 26 mass% or less, still more preferably 4 mass% or more and 22 mass% or less, based on the total amount of the materials constituting the inorganic molded body. Adjusting the content of the reinforcing fiber material within the above range can suppress protrusion of fibers on the surface of the inorganic molded body and improve smoothness while exhibiting a sufficient reinforcing effect. When an inorganic reinforcing fiber material having an average length of 1 mm to 50 mm is blended as the reinforcing fiber material, in order to improve the smoothness of the inorganic molded body, it is preferable to use another reinforcing fiber material in combination such that the content is 10 mass% or less based on the total amount of the materials constituting the inorganic molded body.

### (Calcium-based carbonate compound)

As the calcium-based carbonate compound, a calcium-based carbonate compound without being dried as described above can be suitably employed. That is, it is preferable that the compound be subjected to the production of an inorganic molded body in a state of the water-containing composition without being dried.

The content of the calcium-based carbonate compound is preferably 5 mass% or more and 60 mass% or less, more preferably 8 mass% or more and 55 mass% or less, and still more preferably 12 mass% or more and 50 mass% or less based on the total mass of the materials constituting the inorganic molded body. The calcium-based carbonate compound having low thermal conductivity is blended within the content range to enhance the heat insulating property in the thickness direction of the inorganic molded body, so that the temperature increase at the back surface can be suppressed at a high level.

### (Optional components)

In order to impart various functions to the inorganic molded body, in addition to the above materials, various materials such as a resin hollow body, wood pieces, wood powder, resin powder, an antifoaming agent, a coagulant, a water repellent, a thickener (methyl cellulose, hydroxyethyl methyl cellulose, hydroxypropyl methyl cellulose, and the like), and a dispersant can be blended depending on the purpose. In addition, it is also possible to appropriately add a recycled material obtained by grinding an end material or the like generated when processing the inorganic molded body.

### (Method for producing inorganic molded body)

The method for producing an inorganic molded body according to the present embodiment is not particularly limited, and includes a step of molding an inorganic composition containing the water-containing composition. As the molding method, commonly used papermaking methods, extrusion molding methods, flow-on forming methods, cast molding methods, press (compression) molding, and the like can be used.

The inorganic molded body can be obtained by subjecting a green sheet formed by these methods to a dehydration step by press dehydration or the like and/or a patterning step by embossing or the like, followed by a curing step by normal temperature curing, steam curing, autoclave curing or the like. Furthermore, a drying step is performed, and a shape processing step or a coating step may be performed as necessary.

### (Application of inorganic molded body)

The application of the inorganic molded body is not particularly limited, and the inorganic molded body can be suitably used as performance maintaining materials, for example, interior and exterior finishing materials such as a building wall material, a floor material, a roof material, various boards, an external decorative member, and a fitting, sealing materials, heat insulating materials, sound absorbing materials, and waterproof materials. The inorganic molded body is preferably a cementitious inorganic molded body containing a cementitious material, and more preferably a calcium silicate formed body. The molded body is more preferably a molded plate.

### EXAMPLES

Hereinafter, a detailed description is made of the present invention with reference to Examples, but the present invention is not limited to the following Examples as long as the present invention does not exceed the gist of the present invention. Measurement and evaluation of physical properties and the like were performed as follows.

### <Evaluation of calcium-based carbonate compound>

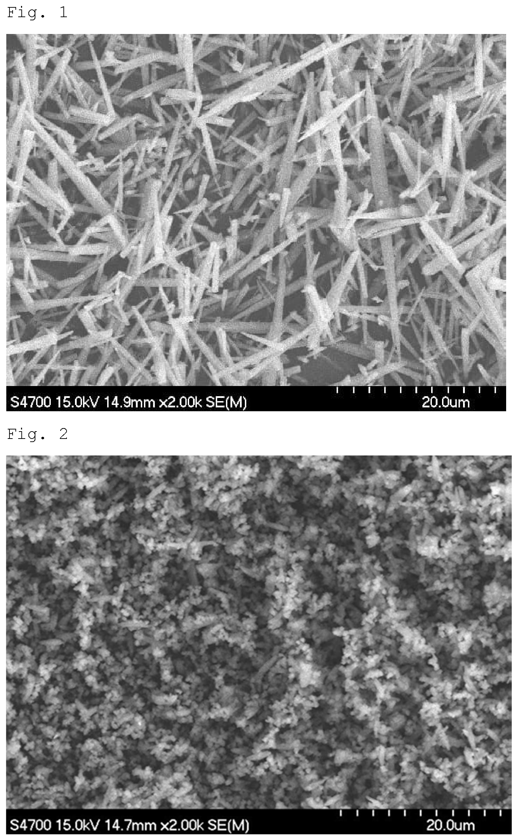

The water-containing compositions, calcium-based carbonate compounds, and the like obtained in Examples and Comparative Examples were subjected to the following analysis. The analysis results are shown in Table 1 and FIGS. 1 to 2. In Table 1, arrows indicate the same results as in the left column.

### (1) BET specific surface area

The BET specific surface area (m²/g) of a sample powder pretreated at about 130 °C for about 30 minutes in a nitrogen gas atmosphere using an 8-unit preheat unit (manufactured by MOUNTECH) was measured by a nitrogen gas adsorption method using Macsorb HM Model-1208 (manufactured by MOUNTECH) as a BET specific surface area measuring apparatus. In order to measure the BET specific surface area, it is necessary to measure the BET specific surface area with a dried sample powder. Accordingly, in the case of a sample cake or a sample slurry, a sample powder obtained by drying them at 110 °C for 24 hours was prepared to provide the sample powder for BET specific surface area measurement.

### (2) Average particle diameter measured by laser diffraction method

Into a 100 mL volume beaker was put 50 mL of ethanol, and then into the 100 mL volume beaker was put about 0.3 g in the case of a sample cake, about 0.6 mL in the case of a sample slurry, or about 0.2 g in the case of a sample powder, followed by ultrasonic treatment for 3 minutes (UD-201 manufactured by Tomy Seiko Co., Ltd.) to prepare a dispersion. The dispersion was measured using a laser diffraction method-particle size distribution meter (Microtrac HRA Model 9320-X100 manufactured by Nikkiso Co., Ltd.) with a volume-based D₅₀ value as the average particle diameter (µm).

### (3) Calculation of average major diameter, average minor diameter, and aspect ratio by scanning electron microscope observation

A double-sided tape was attached onto an aluminum sample stage, and on the tape the sample powder was applied by tracing with a spatula. After platinum vapor deposition was performed, a particle image of the sample powder was photographed at a magnification of 5000 using a scanning electron microscope (FE-SEM: S-4700 manufactured by Hitachi, Ltd.). SEM photographs are shown in FIGS. 1 and 2. FIG. 1 is an SEM photograph of the calcium-based carbonate compound obtained from the water-containing composition of Example 1-1. FIG. 2 is an SEM photograph of the calcium-based carbonate compound obtained from the water-containing composition of Example 1-2. For the obtained SEM photographs, 20 particles in the photograph were randomly selected using image analysis software (Image J) to determine the average values of the major diameter, minor diameter, and aspect ratio (ratio of major diameter to minor diameter) of the primary particle, respectively. In addition, in order to perform observation with a scanning electron microscope, it is necessary to observe the form of a dried sample powder. Accordingly, in the case of a sample cake or a sample slurry, a sample powder obtained by drying the sample cake or the sample slurry at 110 °C for 24 hours was prepared to provide a sample powder for scanning electron microscope observation.

### (4) Calculation of ratio of 46° (aragonite) peak intensity Iₐ to 29° (calcite) peak intensity I_{c} in XRD measurement

The sample powder was pressure-adhered to a predetermined sample stage with a spatula, followed by measurement using an XRD apparatus (MiniFlex 600-C manufactured by Rigaku Corporation) to perform identification analysis as a crystalline material. In the measurement angle 2θ, the peak appearing at about 29° is the main peak of calcite, and the peak appearing at about 46° is the main peak of aragonite. From this, the ratio (Iₐ/I_{c}) of 46° (aragonite) peak intensity Iₐ to 29° (calcite) peak intensity I_{c} was determined. In order to measure XRD, it is necessary to perform the measurement with a dried sample powder. Accordingly, in the case of a sample cake or a sample slurry, a sample powder obtained by drying the sample cake or the sample slurry at 110 °C for 24 hours was prepared to provide a sample powder for XRD measurement.

### (5) Dynamic viscosity, static viscosity, and thixotropic value

The dynamic viscosity, the static viscosity, and the thixotropic value of the slurry prepared so as to have a predetermined concentration were each measured. That is, the viscosity (dynamic viscosity) at a rotor rotation speed of 30 rpm and the viscosity (static viscosity) at a rotor rotation speed of 6 rpm were each measured using a B-type viscometer. The thixotropic value was determined as a value (µ₆/µ₃₀) obtained by dividing the viscosity µ₆ at 6 rpm by the viscosity µ₃₀ at 30 rpm.

### <Production of calcium-based carbonate compound>

### [Example 1-1] Calcium-based carbonate compound (aspect ratio: 10.4)

Into a 220 L volume SUS container with a baffle plate in which 180 L of water was placed in advance, 6980 g of slaked lime powder in terms of CaO, 630 g of aragonite seed crystal powder, and 500 g of disodium hydrogen phosphate 12-hydrate were each charged under stirring to prepare a mixed slurry of raw materials. Thereafter, the temperature was raised to 70 °C, and under that temperature, stirring was performed at a rotation speed of 150 rpm using a stirrer equipped with one stage of turbine blades. An exhaust gas extraction pipe was connected to an exhaust outlet of a steam production boiler using LNG as a fuel. Then, the CO₂ concentration was measured with a CO₂ concentration measuring device (XP-3140 manufactured by New Cosmos Electric Co., Ltd.) while the exhaust gas was drawn using a test blower. As a result, the CO₂ concentration was 10 vol%. The exhaust gas was introduced into the 220 L volume SUS container at a speed of 100 L/min using a test blower and a carbonation reaction was carried out for 7 hours. Thereafter, the mixture was filtered with a test filter press, and then washed with water having a volume of about 5 times the solid content to provide a sample cake having a CaCO₃ concentration of 75 mass%. For evaluation of calcium carbonate, a part of the sample cake was extracted, and the extracted sample cake was used as it was for the evaluation without being dried. In addition, the sample cake was emulsified in water to prepare a sample slurry of calcium carbonate having a CaCO₃ concentration of 33 mass%.

### [Example 1-3] Calcium-based carbonate compound (aspect ratio: 2.7)

A sample cake and a sample slurry of the calcium-based carbonate compound were obtained by the same operation as in Example 1-1 except that 7170 g of milk of lime in terms of CaO was prepared, but the aragonite seed crystal and disodium hydrogen phosphate 12-hydrate were not added, and the temperature at the reaction was 40 °C.

### [Comparative Example 1-1] Calcium-based carbonate compound (aspect ratio: 10.4)

The same operation as in Example 1-1 was carried out until the carbonation reaction occurred. Thereafter, the mixture was filtered with a test filter press, washed, further dried at 110 °C for 24 hours, and pulverized to provide a sample powder of calcium carbonate.

### [Comparative Example 1-2] Calcium-based carbonate compound (aspect ratio: 2.7)

The same operation as in Example 1-2 was carried out until the carbonation reaction occurred. Thereafter, the mixture was filtered with a test filter press, washed, further dried at 110 °C for 24 hours, and pulverized to provide a sample powder of calcium carbonate.

**[Table 1]**

| | Example 1-1 | Comparative Example 1-1 | Example 1-2 | Comparative Example 1-2 |
|---|---|---|---|---|
| BET (m²/g) | 3.7 | ← | 5.5 | ← |
| Average particle diameter (µm) | 3.4 | 4.1 | 1.2 | 3.1 |
| Average major diameter (µm) | 16.6 | ← | 0.8 | ← |
| Average minor diameter (µm) | 1.6 | ← | 0.3 | |
| Aspect ratio (-) | 10.4 | ← | 2.7 | |
| XRD measurement: 46° (aragonite)/29° (calcite) ratio | 25504/10121 = 2.52 | ← | 0/47214 = 0 | ← |
| 33 wt% slurry viscosity 30 rpm (cP) | 1540 | 940 | 1500 | 427 |
| 33 wt% slurry viscosity 6 rpm (cP) | 2230 | 2400 | 1560 | 1520 |
| 33wt% slurry thixotropic value [Viscosity at 6 rpm/viscosity at 30 rpm] (-) | 1.4 | 2.6 | 1.0 | 3.6 |

| | | | | |
|---|---|---|---|---|
| *In Table 1, "←" indicates the same value as that in the left column. | | | | |

### <Production of inorganic molded body>

An inorganic molded body was produced by a papermaking method and an extrusion molding method according to the following procedure. The blending amounts of the components used are all indicated as "parts by mass" unless otherwise specified. In the tables below, "-" indicates that the corresponding component was not used.

### [Production Example 1-1] Production of inorganic molded body by papermaking method

Materials shown in Table 2 below were put into a poly container and stirred and mixed to obtain a raw material slurry. The sample slurry of Example 1-1 (33 mass% in terms of CaCO₃ concentration) was used as the calcium-based carbonate compound so as to have the amount of calcium-based carbonate compound shown in Table 2. The raw material slurry was dividedly charged into a filter covered with felt, performing suction filtration with a vacuum pump, to prepare a laminate (long side 28 mm × short side 24 mm × thickness 14 mm). The laminate was taken out of the filter and subjected to dehydration pressing. The thickness after pressing was 13 mm. After autoclave curing (curing pressure (gauge pressure): 9 kgf; curing time: 12 hr), the pressed body was dried in a dryer (105 °C) for 24 hr. Both surfaces thereof were polished with a sander to adjust the thickness to 12 mm, thereby obtaining an inorganic molded body.

### [Production Example 1-2] Production of inorganic molded body by papermaking method

An inorganic molded body was obtained in the same manner as in Production Example 1-1 except that the sample slurry of Example 1-2 (33 mass% in terms of CaCO₃ concentration) was used as the calcium-based carbonate compound.

### [Comparative Production Example 1-1] Production of inorganic molded body by papermaking method

An inorganic molded body was obtained in the same manner as in Production Production Example 1-1 except that the sample powder of Comparative Example 1-1 was used as the calcium-based carbonate compound.

### [Comparative Production Example 1-2] Production of inorganic molded body by papermaking method

An inorganic molded body was obtained in the same manner as in Production Example 1-1 except that the sample powder of Comparative Example 1-2 was used as the calcium-based carbonate compound.

### <Evaluation of inorganic molded body>

The inorganic molded bodies produced by a papermaking method in Production Examples and Comparative Production Examples were evaluated as follows. The results are shown in Tables 2 and 3.

### (Bulk density)

The bulk density was measured in accordance with JIS A 5430.

### (Heating test)

A heating test was performed by the following apparatus and procedure. FIG. 5 is a partial perspective view schematically showing a heating tester. As shown in FIG. 5, to stabilize the temperature at around 900 °C using an electric heater as a heat source, a refractory material was provided from the test specimen to the heat source, by which the temperature of the back surface of the test specimen was successfully measured with a thermocouple. Specifically, an electric heater (1.2 kW heater) was used as a heat source device, and K thermocouples and a temperature controller were connected. The respective thermocouples were connected to a data logger. The test specimen was fixed such that the distance between the heated surface side of the test specimen and the heat source was about 70 mm.

The test procedure was as follows.
(1) A dummy plate was placed, preheated to 902 °C, and then heated once.
(2) After the heated surface side reached 200 °C or lower, the dummy plate was replaced with a test specimen.
(3) The thermocouple was placed on the center of the back surface (upper surface in the figure) of the test specimen, and a calcium silicate plate (about 30 mm × 70 mm) and a weight were placed for fixing.
(4) Heating is started and left for a predetermined time (45 minutes), and the temperature on the front surface side and the back surface side is recorded in a data logger. During this period, the temperature of the electric heater was set to 902 °C on the heated surface side, and managed by the temperature controller with the lower limit of 900 °C. In addition, the temperature measurement interval of the data logger was set to every 10 seconds, and the data were recorded at this interval.
(5) After completion of the test, the test specimen was taken out, and the following items were measured (the items were also measured before the test).

- Dimensions: The longitudinal and lateral lengths of the back surface and the heated surface were measured with a caliper. The area (mm²) of the heated surface before and after the test was calculated, and the heated surface shrinkage (%) was determined based on the following formula. $Heated surface shrinkage \left(%\right) = \left\{\left|{S}_{1}-{S}_{0}\right|/{S}_{0}\right\} \times 100$ (wherein S₀ is the area of the heated surface before the test, and S₁ is the area of the heated surface after the test.)

**[Table 2]**

| | | Production Example 1-1 | Comparative Production Example 1-1 | Production Example 1-2 | Comparative Production Example 1-2 |
|---|---|---|---|---|---|
| Type of calcium-based carbonate compound | | Example 1-1 | Comparative Example 1-1 | Example 1-2 | Comparative Example 1-2 |
| Material | Cement | 27 | 27 | 27 | 27 |
| | Silica sand | 23 | 23 | 23 | 23 |
| | Pulp | 5 | 5 | 5 | 5 |
| | Wollastonite | 10 | 10 | 10 | 10 |
| | Calcium-based carbonate compound | 35 | 35 | 35 | 35 |
| Content of calcium-based carbonate compound | | 35% | 35% | 35% | 35% |
| Evaluation | Bulk density (g/cm³) | 0.9 | 0.9 | 1.0 | 1.0 |
| | Heated surface shrinkage (%) | 0.0 | 0.5 | 0.5 | 1.0 |
| | Back surface temperature rise (K, 12 mm) | 413 | 450 | 439 | 454 |

The inorganic molded bodies of Production Examples were superior to those of Comparative Production Examples in all of the shrinkage of the heated surface, and the temperature increase at the back surface. Furthermore, the inorganic molded bodies of Production Examples had a strength sufficient for practical use, and no cracks were generated after heating (not shown).

### [Production Example 2-1] Production of inorganic molded body by extrusion molding method

The materials shown in Table 3 below were charged into an omni mixer, and raw materials were dry-stirred for 3 minutes. The sample cake of Example 1-1 (75 mass% in terms of CaCO₃ concentration) was used as the calcium-based carbonate compound so as to have the amount of calcium-based carbonate compound shown in Table 2. Next, water was added, followed by wet stirring for 2 minutes. The raw materials after the wet stirring were kneaded with an Ishikawa-toki's extruder, and then extrusion molded with the Ishikawa-toki's extruder. In this way, a molded body having a long side of 600 mm × a short side of 190 mm × a thickness of 13 mm was produced. After the molded body was obtained, the molded body was charged into a thermo-hygrostat set at 60 °C/98% to undergo primary curing, and the pressure was further raised to 9 kgf for autoclave curing for 12 hours. Both surfaces of the molded body were polished with a sander to have a thickness of 12 mm, thereby producing an inorganic molded body.

### [Production Example 2-2] Production of inorganic molded body by extrusion molding method

An inorganic molded body was obtained in the same manner as in Production Example 2-1 except that the sample cake of Example 1-2 (75 mass% in terms of CaCO₃ concentration) was used as the calcium-based carbonate compound.

### [Comparative Production Example 2-1] Production of inorganic molded body by extrusion molding method

An inorganic molded body was obtained in the same manner as in Production Example 2-1 except that the sample powder of Comparative Example 1-1 was used as the calcium-based carbonate compound.

### [Comparative Production Example 2-2] Production of inorganic molded body by extrusion molding method

An inorganic molded body was obtained in the same manner as in Production Example 2-1 except that the sample powder of Comparative Example 1-2 was used as the calcium-based carbonate compound.

### <Evaluation of inorganic molded body>

The inorganic molded bodies produced by an extrusion molding method in Production Examples and Comparative Production Examples were evaluated as follows. The results are shown in Table 3.

### (Bulk density)

The bulk density was measured in accordance with JIS A 5430.

### (Heating test)

Measurement was performed in the same manner as in the papermaking method.

**[Table 3]**

| | | Production Example 2-1 | Comparative Production Example 2-1 | Production Example 2-2 | Comparative Production Example 2-2 |
|---|---|---|---|---|---|
| Type of calcium-based carbonate compound | | Example 1-1 | Comparative Example 1-1 | Example 1-2 | Comparative Example 1-2 |
| Material | Cement | 30 | 30 | 30 | 30 |
| | Silica stone powder | 17 | 17 | 17 | 17 |
| | Wollastonite | 5 | 5 | 5 | 5 |
| | Pulp | 8 | 8 | 8 | 8 |
| | Methyl cellulose | 1 | 1 | 1 | 1 |
| | Fly ash balloon | 9 | 9 | 9 | 9 |
| | Calcium-based carbonate compound | 30 | 30 | 30 | 30 |
| Content of calcium-based carbonate compound | | 30% | 30% | 30% | 30% |
| Evaluation | Bulk density (g/cm³) | 1.1 | 1.1 | 1.1 | 1.1 |
| | Heated surface shrinkage (%) | 1.0 | 1.1 | 1.4 | 1.6 |
| | Back surface temperature rise (K, 12 mm) | 479 | 494 | 484 | 496 |

The inorganic molded bodies of Production Examples were superior to those of Comparative Production Examples in all of the shrinkage of the heated surface and warpage after heating. Furthermore, the inorganic molded bodies of Production Examples had a strength sufficient for practical use, and no cracks were generated after heating (not shown).

## Claims

1. A calcium-based carbonate compound, wherein a viscosity at 30 rpm of a dispersion in a state that the calcium-based carbonate compound is dispersed in water at a concentration of 33 mass% is 1000 cP or more and 2000 cP or less.

2. The calcium-based carbonate compound according to claim 1, wherein a viscosity at 6 rpm of a dispersion in a state that the calcium-based carbonate compound is dispersed in water at a concentration of 33 mass% is 1000 cP or more and 2500 cP or less.

3. The calcium-based carbonate compound according to claim 2, wherein a ratio µ₆/µ₃₀ of a viscosity µ₆ at 6 rpm to a viscosity µ₃₀ at 30 rpm of a dispersion in a state that the calcium-based carbonate compound is dispersed in water at a concentration of 33 mass% is 1.0 or more and 2.5 or less.

4. The calcium-based carbonate compound according to claim 1, wherein an aspect ratio of an average major diameter to an average minor diameter of the calcium-based carbonate compound is 2 or more and 19 or less.

5. The calcium-based carbonate compound according to claim 1, having an average particle diameter measured by a laser diffraction method of 1.1 µm or more and 12.5 µm or less.

6. The calcium-based carbonate compound according to claim 1, having an average major diameter in scanning electron microscope observation of 0.5 µm or more and 25 µm or less.

7. A water-containing composition comprising water and the calcium-based carbonate compound according to any one of claims 1 to 6.

8. The water-containing composition according to claim 7, wherein a water content is 40 mass% or more and 99 mass% or less.

9. The water-containing composition according to claim 7, wherein a water content is 5 mass% or more and 60 mass% or less.

10. The water-containing composition according to claim 7, which is obtainable without being dried in a step of producing a synthetic calcium-based carbonate compound.

11. An inorganic molded body, comprising the calcium-based carbonate compound according to any one of claims 1 to 6.

12. A method for producing an inorganic molded body, comprising
molding an inorganic composition comprising the water-containing composition according to any one of claims 7 to 10.
